# EUROPÄISCHE PATENTSCHRIFT

(11) **EP 0 857 116 B1**
(45) Veröffentlichungstag und Bekanntmachung des Hinweises auf die Patenterteilung: **16.01.2002**
(21) Anmeldenummer: 96929310.9
(22) Anmeldetag: 22.08.1996
(51) Int. Cl.: B60J 10/02, B60J 10/00

(54) **SCHEIBENEINHEIT FÜR FENSTER AN KRAFTFAHRZEUGEN UND DERGLEICHEN**
PANE UNIT FOR WINDOWS IN MOTOR VEHICLES AND THE LIKE
ENSEMBLE VITRE POUR FENETRE DE VEHICULES A MOTEUR ET ANALOQUES

(30) Priorität: 27.10.1995 DE 19539960
(43) Veröffentlichungstag der Anmeldung: 12.08.1998
(73) Patentinhaber: RICHARD FRITZ GMBH + CO. KG, 74354 Besigheim (DE)
(72) Erfinder: BISSINGER, Rainer, D-74376 Gemmrigheim (DE); HERBST, Erich, D-74354 Besigheim (DE); SENGE, Christoph, D-66763 Dillingen-Diefflen (DE)
(74) Vertreter: Kastner, Hermann, Dipl.-Ing., Patentanwalt
(86) Internationale Anmeldenummer: EP9603712
(87) Internationale Veröffentlichungsnummer: WO9716325

(56) Entgegenhaltungen:
- EP-A- 0 618 099
- FR-A- 2 577 483
- GB-A- 2 093 104
- US-A- 4 765 673
- US-A- 4 950 019
- US-A- 5 261 721
- US-A- 5 311 711
- US-A- 5 338 087

## Beschreibung

Glasscheiben für Fenster von Kraftfahrzeugen und dergleichen werden häufig mit einem Rahmen aus Kunststoff versehen, der ein bestimmtes Querschnittsprofil hat. Diese Scheibeneinheit wird mit Hilfe ihres Rahmens in eine vorbestimmte Öffnung des Kraftfahrzeuges eingesetzt und darin befestigt. Im allgemeinen dient der Rahmen zugleich auch der Abdichtung der Scheibeneinheit gegenüber dem anschließenden Bauteil.

Die herkömmlichen Scheibeneinheiten werden auf zweierlei Art mit dem Bauteil vereinigt. Bei der einen Art wird der Rahmen mit dem Randbereich der Öffnung des Bauteils verklebt oder es wird die Scheibe selbst mit dem Randbereich der Öffnung des Bauteils verklebt, wie es aus der US-A-4,950,019 bekannt ist, deren Rahmen zudem aus einem Strangpreßprofil hergestellt ist, das erst nachträglich zum Rahmen verbunden wird. Bei der anderen Art weist der Rahmen Profilabschnitte auf, die am Randbereich der Bauteilöffnung auf zwei voneinander abgekehrten Seiten am Bauteil anliegen und durch Formschluß die Scheibeneinheit am Bauteil festhalten.

Die eine Art hat den Nachteil, daß die Scheibeneinheit sich nicht mehr oder nur noch mit großen Schwierigkeiten und mit entsprechendem Arbeitsaufwand vom Bauteil trennen läßt. Das gilt sowohl in dem Falle, daß die Scheibeneinheit ersetzt werden soll wie auch in dem Falle, daß das Kraftfahrzeug und die Scheibeneinheit getrennt entsorgt werden sollen, insbesondere einem Recyclingkreislauf zugeführt werden sollen. Bei der anderen Art muß für das Herstellen des Formschlusses zwischen dem Rahmen und dem Bauteil wenigstens ein Teil der Profilabschnitte des Rahmens so nachgiebig sein, daß das Vereinigen beider Teile überhaupt möglich ist. Dadurch ist die Haltekraft gegenüber dem Bauteil eingeschränkt, was auch die Einsatzmöglichkeiten dieser Scheibeneinheit einschränkt.

Beide Arten der Vereinigung der Scheibeneinheit mit dem Bauteil haben gemeinsam noch einen weiteren Nachteil. Der mit der Glasscheibe dauerhaft verbundene Rahmen wird im allgemeinen aus einem thermoplastischen Kunststoff hergestellt und in einer darauf abgestimmten Spritzform im Spritzverfahren unmittelbar an der Glasscheibe angeformt. Dazu muß im Bereich des Rahmens die Glasscheibe zuvor mit einem Haftvermittler versehen werden. Der Rahmen ist dann so dauerhaft mit der Glasscheibe verbunden, daß sie nicht mehr oder nur mit einem unvertretbar hohen Aufwand voneinander getrennt werden können und daher die Glasscheibe und der Rahmen selbst dann nicht getrennt voneinander entsorgt und einem Recyclingkreislauf zugeführt werden können, wenn die Scheibeneinheit sich leicht vom Bauteil lösen ließe.

Die geschilderte Art der Herstellung der Scheibeneinheit hat noch den weiteren Nachteil, daß der Haftvermittler für seine Aktivierung einerseits gegenüber der Glasscheibe und andererseits gegenüber dem Werkstoff des Rahmens auf eine Temperatur von ca. 120° C erwärmt werden muß. Der Kunststoff für den Rahmen erfordert eine Erwärmung auf ca. 200° C, damit er ausreichend fließfähig ist und die Spritzform vollständig ausfüllt, ohne daß dafür ein sehr hoher Preßdruck erforderlich ist. Dieser erhöhten Temperatur ist die Glasscheibe in der Preßform während der Zeitspanne ausgesetzt, die der eingespritzte Kunststoff benötigt, um sich abzukühlen und sich dabei so weit zu verfestigen, daß die Glasscheibe mit dem daran angeformten Rahmen aus der Preßform herausgenommen werden kann, ohne daß der Rahmen sich dabei nachträglich bleibend verformt.

Bei Verbundglasscheiben für Kraftfahrzeuge sind zwei Glasscheiben gleicher Form vorhanden, die unter Zwischenfügen einer Folie miteinander zur Verbundglasscheibe rein mechanisch vereinigt werden. Diese Folie besteht aus einem thermoplastischen Kunststoff. Dieser erträgt nur eine Temperatur von ca. 70° bis 80° C. Bei höheren Temperaturen verändert er sich und wird milchig trüb, so daß eine Verbundglasscheibe in den betreffenden Flächenbereichen undurchsichtig und unansehnlich wird. Verbundglasscheiben können daher nicht im Spritzverfahren mit einem Rahmen versehen werden. Dafür bleibt nur die gesonderte Herstellung des Rahmens übrig, der nachträglich mittels entsprechend gestalteter Profilabschnitte mit der Verbundglasscheibe vereinigt wird. Dadurch ist die Haltekraft zwischen dem Rahmen und der Verbundglasscheibe stark eingeschränkt, unabhängig davon, ob der Rahmen seinerseits mit dem Bauteil durch Verkleben dauerhaft verbunden ist oder durch Formschluß mittels nachgiebiger Profilabschnitte ebenfalls nur mit eingeschränkter Haltekraft vereinigt ist.

Ausgehend von einer Scheibeneinheit, die ähnlich derjenigen der US-A-4,950,019 ausgebildet ist, liegt der Erfindung die Aufgabe zugrunde, eine Scheibeneinheit zu schaffen, bei der der Rahmen und die Glasscheibe einerseits mit einer hohen Haltekraft miteinander vereinigt sind und andererseits wieder leicht voneinander gelöst werden können. Diese Aufgabe wird durch eine Scheibeneinheit mit den im Anspruch 1 oder 2 angegebenen Merkmalen gelöst.

Dadurch, daß der Rahmen aus zwei Profilteilen gebildet wird, von denen der primäre Profilteil den Rendbereich der Glasscheibe auf drei Seiten formschlüssig umgibt, kann auf die Verwendung eines Haftvermittlers verzichtet werden, wodurch sich später der Rahmen wieder von der Glasscheibe lösen läßt, um etwa beide Teile getrennt voneinander zu entsorgen. Da die Glasscheibe nicht mehr mit einem Haftvermittler versehen wird, muß sie auch nicht auf dessen Aktivierungstemperatur erwärmt werden. Sie kann vielmehr kalt in die Spritzform eingelegt werden. Beim Einspritzen des Kunststoffes für den primären Profilteil wirkt er nur kurzzeitig mit der Spritztemperatur auf die Glasscheibe ein, weil er sich an der kalten Glasscheibe sofort abkühlt und erstarrt. Wegen der hohen Formfestigkeit des primären Profilteils ist einerseits eine hohe Haltekraft zwischen der Glasscheibe und dem Rahmen gewährleistet und wegen des enderen Ablaufes des Umspritzens des Randes der Glasscheibe ist andererseits deren Wärmebelastung erheblich verringert. Dadurch können selbst Verbundglasscheiben mit einem deratigen Rahmen versehen werden. Am sekundären Profilteil können solche Profilabschnitte vorgesehen werden, die aufgrund der geringeren Formfestigkeit ihres Werkstoffes ausreichend nachgiebig sind und daher anschmiegsame Dichtungsleisten zu bilden vermögen.

Bei der Ausführungform nach Anspruch 1 wird eine verhältnismäßig hohe Haftkraft zwischen der Scheibeneinheit und dem Bauteil erreicht. Bei der Ausführungsform nach Anspruch 2 kann die Scheibeneinheit durch elastische Verformung eines Profilabschnittes des weiteren Profilteils mit dem Bauteil verbunden werden und auch wieder restlos von ihm gelöst werden.

Eine Ausgestaltung nach Anspruch 5 kommt vor allem dann in Betracht, wenn die beiden Profilteile durch Formschluß miteinander verbunden werden sollen. Eine Ausgestaltung nach Anspruch 6 kommt vor allem dann in Betracht, wenn der sekundäre Profilteil am primären Profilteil angeformet werden soll. Selbst wenn des eine höhere Verarbeitungstemperatur erfordert, ist die Wärmebelastung der Glasscheibe erheblich geringer, da sie von dem ohnehon nur eng anliegenden, aber nicht mit ihr verbundenen Werkstoff des primären Profilteils abgeschirmt wird.

Bei einer Ausgestaltung nach Anspruch 7 können die Befestigungselemente oder Verankerungselemente zusammen mit dem Rahmen hergestellt werden. Die Scheibeneinheit kann am Bauteil beispielsweise durch plastische Verformung der Befestigungselemente, gegebenenfalls unter Wärmeeinwirkung, mit dem Bauteil verbunden werden.

Bei einer Ausgestaltung nach Anspruch 8 wird die Verbindung der Scheibeneinheit mit dem Bauteil unter Verwendung zusätzlicher Befestigungselemente erreicht, die mit den am Rahmen angeformten Befestigungselementen zusammenwirken und die beispielsweise als selbstschneidende Muttern oder als Sicherungsscheiben ausgebildet sein können.

Im folgenden wird die Erfindung anhand einiger in der Zeichnung dargestellter Ausführungsbeispiele näher erläutert. Es zeigen:
- Fig. 1: einen ausschnittweise dargestellten Querschnitt einer Scheibeneinheit mit einem ersten Ausführungsbeispiel des Rahmens;
- Fig. 2: einen ausschnittweise dargestellten Querschnitt einer Scheibeneinheit mit einem weiteren Ausführungsbeispiel des Rahmens zusammen mit einem Bauteil;
- Fig. 3: einen ausschnittweise dargestellten Querschnitt einer Scheibeneinheit mit einem dritten Ausführungsbeispiel des Rahmens zusammen mit einem Bauteil;
- Fig. 4: einen ausschnittweise dargestellten Querschnitt einer Scheibeneinheit mit einem vierten Ausführungsbeispiel des Rahmens zusammen mit einem Bauteil.

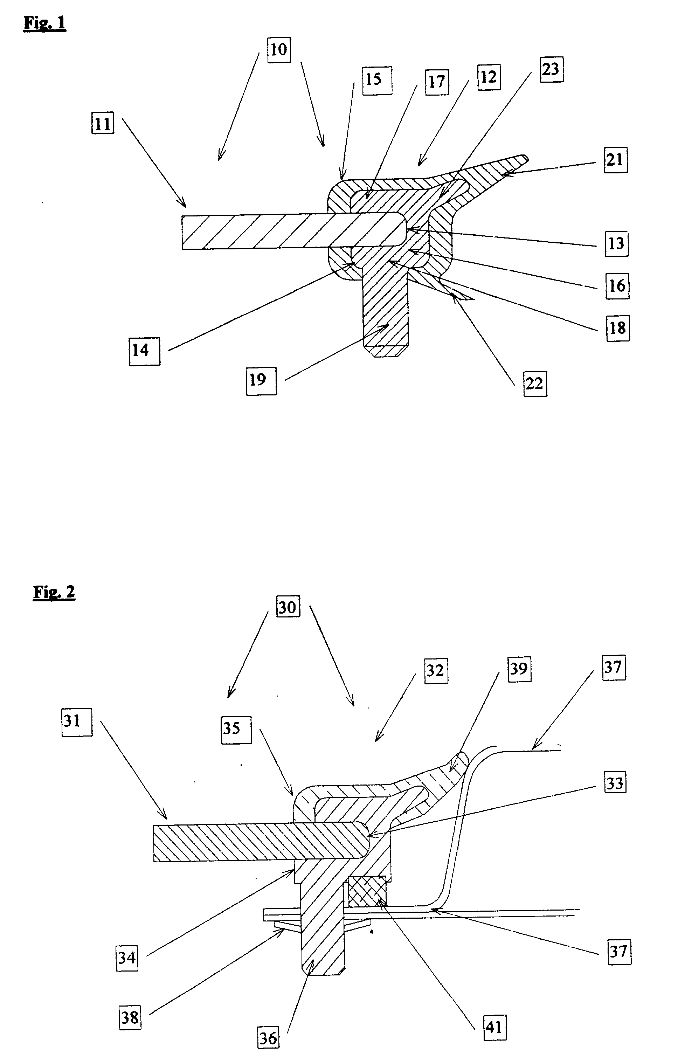

Die aus Fig. 1 ersichtliche Scheibeneinheit 10 wird durch eine Glasscheibe 11 und einen Rahmen 12 gebildet, der sich entlang dem Rand 13 der Glasscheibe 11 erstreckt und ringförmig in sich geschlossen ist.

Der Rahmen 12 ist als Preßformteil ausgebildet. Er wird durch zwei Profilteile, und zwar den primären Profilteil 14 und den sekundären Profilteil 15, gebildet.

Der primäre Profilteil 14 weist drei Profilabschnitte auf, die zusammen ein zumindest annähernd U-förmiges Gesamtprofil ergeben. Der erste Profilabschnitt 16 ist dem Rand 13 der Glasscheibe 11 benachbart. Der zweite Profilabschnitt 17 und der dritte Profilabschnitt 18 schließen an je einer Seite des ersten Profilabschnittes 16 an und sind demjenigen Flächenbereich der Glasscheibe 11 eng benachbart, die an den Rand 13 angrenzen.

Als Werkstoff für den primären Profilteil 14 kommen Polypropylen, Polyurethan, Polyamid oder Polyvinylchlorid in Betracht. Für den primären Profilteil 14 werden diese Kunststoffe in einer Werkstoffqualität verwendet, die einen ausreichend hohen Biegemodul von wenigstens 1.000 N/mm² hat, damit der primäre Profilteil 14 eine ausreichend hohe Formfestigkeit hat und zwischen der Glasscheibe 11 und dem Rahmen 12 ein Formschluß gewährleistet ist, der nur durch die Zerstörung des primären Profilteils 14 oder zumindest eines seiner seitlichen Profilabschnitte beendet wird.

Der primäre Profilteil 14 wird in einer Spritzform durch Umspritzen des Randbereiches der Glasscheibe 11 hergestellt. Dabei wird kein Haftvermittler verwendet, so daß der primäre Profilteil 14 zwar am Randbereich der Glasscheibe 11 anliegt, mit dieser aber nicht fest verbunden ist.

Am primären Profilteil 14 sind eine Anzahl Befestigungselemente 19 vorhanden, die entlang dem Randbereich der Glasscheibe 11 nach einem vorgegebenen Verteilungsmuster verteilt angeordnet sind. Sie sind auf der Innenseite der Scheibeneinheit 10, d.h. auf der dem nicht dargestellten Bauteil zugekehrten Seite, beispielsweise als zylindrische Zapfen ausgebildet und als solche untereinander parallel ausgerichtet. Sie schließen an dem Profilabschnitt 18 des primären Profilteils 14 an, und zwar sind sie daran angeformt. Diese Befestigungselemente 19 dienen dazu, beim Einbau der Scheibeneinheit 10 an einem Bauteil in darauf abgestimmte Ausnehmungen am Bauteil hinein- und/oder hindurchgesteckt zu werden. Soweit diese Ausnehmungen nicht bereits so gestaltet sind, daß nach dem Einführen der Befestigungselemente 19 ein ausreichender Reibschluß gegeben ist, ist es zweckmäßig, zusätzliche Befestigungselemente einzusetzen, z.B. in Form von selbstschneidenden Muttern oder in Form von Sicherungsscheiben, die auf die zapfenförmigen Befestigungselemente 19 aufgeschraubt bzw. aufgesteckt werden und die dadurch einen Formschluß bewirken.

Der sekundäre Profilteil 15 hat eine andere Funktion als die des primären Profilteils 14. Er dient vor allem der engen Anlage des Rahmens 12 an dem zugeordneten Bauteil und auch der Abdichtung der Scheibeneinheit 10 gegenüber dem Bauteil, so daß zwischen dem Bauteil und dem Rahmen 12 der Scheibeneinheit 10 kein Wasser und/oder Schmutz in das Innere des Bauteils eindringen kann. Zu diesem Zweck ist der sekundäre Profilteil 15 aus einem thermoplastischen Kunststoff hergestellt, dessen Härte geringer als 90 Shore A ist.

Am sekundären Profilteil 15 sind Profilabschnitte 21 und 22 vorhanden, die so geformt sind, daß sie im Ausgangszustand oder Ruhezustand in einen Profilbereich hineinragen, der nach dem Einbau der Scheibeneinheit 10 wenigstens zum Teil von dem Bauteil eingenommen wird, so daß diese Profilabschnitte dabei teilweise elastisch verformt werden und aufgrund der Nachgiebigkeit ihres Werkstoffes sich eng an das Bauteil anschmiegen und auf diese Weise eine gute Abdichtung ergeben.

Wenn ein solcher Profilabschnitt, wie der Profilabschnitt 21 verhältnismäßig weit auskragt, ist es zweckmäßig, den Wurzelbereich des als Dichtungsleiste wirkenden Profilabschnittes 21 durch einen in den Querschnittsbereich des Profilabschnittes 21 hineinragenden Profilabschnitt 23 des primären Profilteils 14 zu verstärken und zu versteifen.

Aus den dargelegten Gründen wird für den sekundären Profilteil 15 ein Kunststoff verwendet, der eine größere Nachgiebigkeit als der Werkstoff des primären Profilteils 14 und damit im allgemeinen auch eine geringere Formfestigkeit hat. Grundsätzlich kommt dafür die gleiche Kunststoffart wie diejenige des primären Profilteils 14 in Betracht, wobei die Werkstoffeigenschaften entsprechend abgestimmt sind. In diesem Falle kann der sekundäre Profilteil 15 dadurch hergestellt und zugleich mit dem primären Profilteil 14 dauerhaft verbunden werden, daß die Glasscheibe mit dem zuvor daran angebrachten primären Profilteil 14 in eine entsprechend gestaltete Spritzform eingelegt wird und der auf den sekundären Profilteil 15 abgestimmte verbliebene Hohlraum der Spritzform mit dem Werkstoff für den sekundären Profilteil 15 ausgefüllt wird. Dabei tritt an den Berührungsflächen zwischen dem primären und dem sekundären Profilteil eine innige Verbindung des Werkstoffes beider Profilteile ein. Die beiden Profilteile werden gewissermaßen miteinander verschweißt.

Bei dieser Art der Herstellung und Verbindung der beiden Profilteile genügt es, wenn der sekundäre Profilteil 15 wenigstens auf einem Teil der Umfangslinie des primären Profilteils 14 an diesen anschließt. Wenn die Kunststoffe der beiden Profilteile sich nicht miteinander verbinden, ist dafür zu sorgen, daß der sekundäre Profilteil den primären Profilteil so weit umschließt oder umgreift, daß entlang die Längserstreckung des Rahmens wenigstens abschnittweise ein Formschluß zwischen dem sekundären und dem primären Profilteil entsteht. Dafür kann der normale Profilverlauf des primären Profilteils herangezogen werden. Es können aber auch am primären Profilteil angeformte einzelne Verankerungselemente vorgesehen werden, die später vom sekundären Profilteil umfaßt werden.

Bei dem aus Fig. 1 ersichtlichen Rahmen 12 ist der sekundäre Profilteil 15 so gestaltet, daß er mit Ausnahme derjenigen Profilbereiche, in denen sich die Glasscheibe 11 und die zapfenförmigen Befestigungselemente 19 befinden, den primären Profilteil 14 vollständig umgibt. In denjenigen Flächenbereichen, in denen der sekundäre Profilteil 15 an die Glasscheibe 11 heranreicht, wird kein Haftvermittler eingesetzt, so daß auch dieser Profilteil an der Glasscheibe 11 nur anliegt, nicht aber mit ihr verbunden ist.

Bei der aus Fig. 1 ersichtlichen Profilgestaltung können für die beiden Profilteile Kunststoffe verwendet werden, die sich miteinander verbinden und auch solche Kunststoffe, die sich nicht miteinander verbinden.

Die aus Fig. 2 ersichtliche Scheibeneinheit 30 wird durch die Glasscheibe 31 und den Rahmen 32 gebildet. Im Bereich ihres Randes 33 wird die Glasscheibe 31 auf drei Seiten von dem primären Profilteil 34 umgeben, der an der Glasscheibe 31 eng anliegt, mit ihr aber nicht fest verbunden ist. Der primäre Profilteil 34 wird auf einem Teil seines Profilumfanges von dem sekundären Profilteil 35 umgeben. Die Kunststoffe der beiden Profilteile 34 und 35 sind von der gleichen Art, so daß der sekundäre Profilteil 35 bei seiner Herstellung sich mit dem Kunststoff des primären Profilteils 34 verbindet.

Der primäre Profilteil 34 ist wiederum mit einer Anzahl zapfenförmiger Befestigungselemente 36 versehen. Sie werden durch je eine Ausnehmung eines Bauteils 37 hindurchgesteckt, an dem die Scheibeneinheit 30 angebracht wird. Auf die zapfenförmigen Befestigungselemente 36 ist je eine Sicherungsscheibe 38 aufgesteckt, deren Haltezungen sich an dem Befestigungselement 36 festkrallen. Statt solcher Sicherungsscheiben aus Metall können auch Aufsteckkappen aus Kunststoff eingesetzt werden, die mit den zapfenförmigen Befestigungselementen 36 verklebt oder verschweißt werden.

An einer Seite des sekundären Profilteils 35 ist wiederum ein auskragender Profilabschnitt 39 vorhanden, der so gestaltet ist, daß er beim Einbau der Scheibeneinheit 30 am Bauteil 37 sich geringfügig elastisch verformt und dadurch eng am Bauteil 37 anschmiegt und als Dichtungsleiste wirkt.

Der Rahmen 32 ist außerdem mit einer zusätzlichen Abdichtung in Form eines umlaufenden Dichtungsbandes 41 aus Moosgummi versehen, das auf der dem Bauteil 37 zugekehrten Seite des primären Profilteils 34 an einer darauf abgestimmten Anlagefläche angeklebt ist. Beim Einbau der Scheibeneinheit 30 am Bauteil 37 wird der Rahmen 32 so weit gegen das Bauteil 37 gedrückt, daß das Dichtungsband 41 zum Teil elastisch verformt wird. Erst danach werden die Sicherungsscheiben 38 auf die Befestigungselemente 36 aufgeschoben.

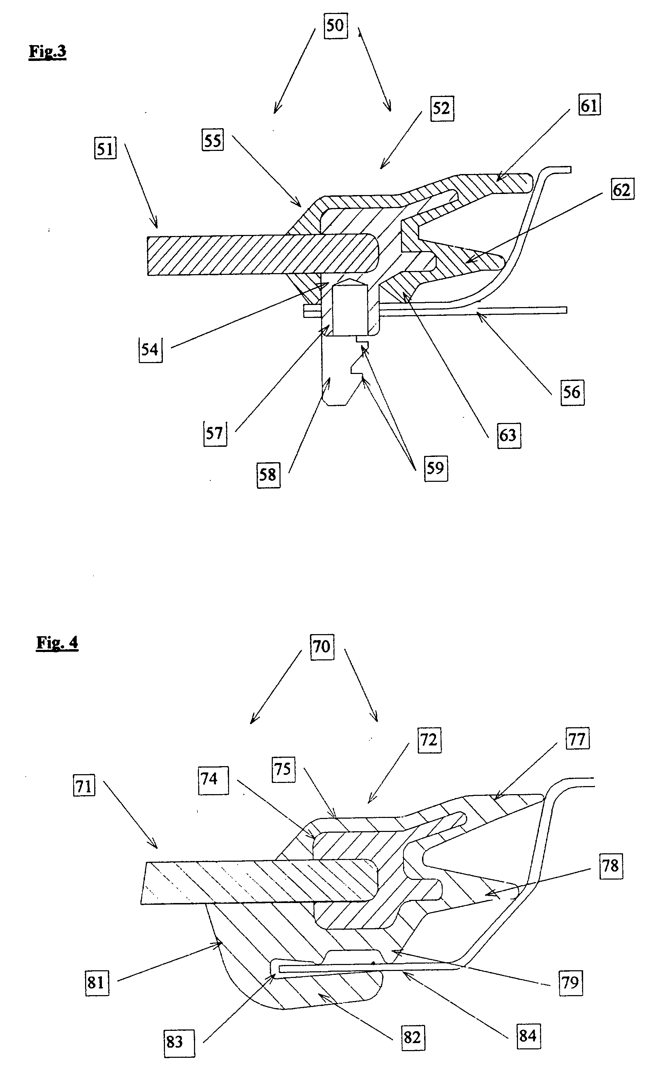

Die aus Fig. 3 ersichtliche Scheibeneinheit 50 wird durch die Glasscheibe 51 und den Rahmen 52 gebildet. Der Rahmen 52 wird wiederum durch den primären Profilteil 54 und den sekundären Profilteil 55 gebildet.

Am primären Profilteil 54 sind auf der dem Bauteil 56 zugekerten Seite eine Anzahl Befestigungselemente 57 und Verankerungselemente 58 angeordnet.

Die Befestigungselemente 57 sind als zylinderförmige hohle Schweißzapfen ausgebildet, die nach dem Durchstecken durch eine Ausnehmung des Bauteils 56 durch Wärmeeinwirkung plastisch so verformt werden, daß sie wie bei einem Hohlniet in der Umgebung der Ausnehmung des Bauteilt 56 einen Kragen bilden und dadurch einen Formschluß zwischen dem Befestigungszapfen 57 und dem Bauteil 56 bewirken.

Die Verankerungselemente 58 sind ebenfalls zapfenförmige Profilabschnitte, die auf einer Seite mit einer oder mit mehreren Hakennasen 59 versehen sind. In diesem Falle sind die Ausnehmungen im Bauteil 56 so auf die Verankerungselemente 58 abgestimmt, daß diese mit ihren Hakennasen 59 beim Einstecken in die Ausnehmungen elastisch zurückweichen können und daß beim anschließenden Zurückfedern die Hakennasen 59 den Rand der Ausnehmung des Bauteils 56 hintergreifen.

Am Rahmen 52 können entweder nur die Befestigungselemente 57 oder nur die Verankerungselemente 58 eingesetzt werden oder in einzelnen Abschnitten des Rahmens 52 mal die Befestigungselemente und mal die Verankerungselemente eingesetzt werden, um so besondere Erfordernisse der Verbindung der Scheibeneinheit 50 mit dem Bauteil 56 leichter erfüllen zu können.

Am sekundären Profilteil 55 sind mehrere Profilabschnitte vorhanden, die der Anlage des Rahmens 52 am Bauteil 56 dienen. Die Profilabschnitte 61 und 62 haben eine größere Länge und damit eine größere elastische Nachgiebigkeit, so daß sie als Dichtungsleisten wirken können. Der kürzere Profilabschnitt 63 dient mehr der Anlage des Rahmens 52 am Bauteil 56. Im Rahmen der Nachgiebigkeit oder Anschmiegsamkeit seines Werkstoffes vermag er auch als Dichtung zu wirken.

Die aus Fig. 4 ersichtliche Scheibeneinheit 70 wird durch die Glasscheibe 71 und den Rahmen 72 gebildet.

Der Rand 73 und die daran anschließenden Flächenbereiche der Glasscheibe 71 werden von dem primären Profilteil 74 umgeben, das eng daran anliegt, aber damit nicht fest verbunden ist. Der primäre Profilteil 74 wird mit Ausnahme des Bereiches der Glasscheibe 71 ringsum von dem sekundären Profilteil 75 umgeben. Dabei kann reiner Formschluß vorliegen, wenn die Kunststoffe der beiden Profilteile sich nicht miteinander verbinden. Bei entsprechender Werkstoffwahl können die beiden Profilteile aber auch durch Verschweißen der Werkstoffe dauerhaft miteinander verbunden sein.

Am primären Profilteil 74 sind keinerleit Befestigungs- und/oder Verankerungselemente vorhanden. Davon abgesehen ist er weitgehend wie der primäre Profilteil 54 des Rahmens 52 (Fig. 3) ausgebildet. Auch der sekundäre Profilteil 75 ist zu einem erheblichen Teil gleich dem sekundären Profilteil 55 des Rahmens 52 ausgebildet und weist an den dem Bauteil 76 zugekehrten Seiten die Profilabschnitt 77, 78 und 79 auf, die der Abdichtung gegenüber dem Bauteil 76 bzw. der Anlage an diesem Bauteil dienen.

Im Bereich des Randes der durch die Scheibeneinheit 70 zu verschließenden Öffnung des Bauteils 76 schließt an den sekundären Profilteil 75 ein weiterer Profilteil 81 an, der aus dem gleichen Kunststoff ist und zusammen mit dem sekundären Profilteil 75 hergestellt wird.

Der weitere Profilteil 81 weist einen Profilabschnitt 82 auf, der von dem benachbarten Profilabschnitt des sekundären Profilteils 75 einen geringen Abstand hat, so daß dazwischen ein schmaler Schlitz 83 vorhanden ist, in den nach dem Einbau der Scheibeneinheit 70 ein Randabschnitt 84 des Bauteils 76 eingreift. Zu diesem Zweck ist der Profilabschnitt 82 des weiteren Profilteils 81 elastisch so nachgiebig ausgebildet, daß er auf bekannte Art mittels einer zuvor in dem Schlitz 83 eingelegten Schnur unter dem Randabschnitt 84 des Bauteils 76 abschnittweise hervorgezogen werden kann, wonach er sich aufgrund seiner Elastizität an der Außenseite des Randabschnittes 84 anlegt und dadurch die Scheibeneinheit 70 am Bauteil 76 festhält.

### Bezugszeichenliste

- 10: Scheibeneinheit
- 11: Glasscheibe
- 12: Rahmen
- 13: Rand
- 14: primärer Profilteil
- 15: sekundärer Profilteil
- 16: 1. Profilabschnitt
- 17: 2. Profilabschnitt
- 18: 3. Profilabschnitt
- 19: Befestigungselement
- 21: Profilabschnitt/Dichtungsleiste
- 22: Profilabschnitt/Dichtungsleiste
- 23: Profilabschnitt/Dichtungsleiste

- 30: Scheibeneinheit
- 31: Glasscheibe
- 32: Rahmen
- 33: Rand
- 34: primärer Profilteil
- 35: sekundärer Profilteil
- 36: Befestigungselement
- 37: Bauteil
- 38: Sicherungsscheibe
- 39: Profilabschnitt
- 41: Dichtungsband

- 50: Scheibeneinheit
- 51: Glasscheibe
- 52: Rahmen
- 54: primärer Profilteil
- 55: sekundärer Profilteil
- 56: Bauteil
- 57: Befestigungselemente
- 58: Verankerungselemente
- 59: Hakennasen
- 61: Profilabschnitt
- 62: Profilabschnitt
- 63: Profilabschnitt

- 70: Scheibeneinheit
- 71: Glasscheibe
- 72: Rahmen
- 73: Rand
- 74: primärer Profilteil
- 75: sekundärer Profilteil
- 76: Bauteil
- 77: Profilabschnitt
- 78: Profilabschnitt
- 79: Profilabschnitt
- 81: Profilteil
- 82: Profilabschnitt
- 83: Schlitz
- 84: Randabschnitt

## Patentansprüche

1. Scheibeneinheit für Fenster an Kraftfahrzeugen und dergleichen, mit den Merkmalen:
- es ist eine Scheibe (11) aus Silikatglas oder aus Acrylglas vorhanden,
- es ist ein Rahmen (12) mit einem bestimmten Rahmenprofil vorhanden, der den Rand (13) der Scheibe (11) an drei Seiten umfaßt, wobei
- der Rahmen (12) ringförmig in sich geschlossen ausgebildet und aus zwei Profilteilen, einem primären Profilteil (14) und einem sekundären Profilteil (15), gebildet ist,
- der primäre Profilteil (14) drei Profilabschnitte (16 ... 18) aufweist
- - von denen ein Profilabschnitt (16) dem Rand (13) der Scheibe (11) benachbart ist und
- - von denen der zweite und dritte Profilabschnitt (17; 18) an je einer Seite des ersten Profilebschnittes (16) anschließen und jeweils demjenigen Flächenbereich der Scheibe (11) benachbart sind, der an den Rand (13) der Scheibe (11) angrenzt,
- der primäre Profilteil (14) aus einem Werkstoff gebildet ist,
- - der sich mit dem Werkstoff der Scheibe (11) nicht verbindet,
- der sekundäre Profilteil (15)
- - in einem der Anlage der Scheibe (11) an einem Bauteil dienenden Bereich des Rahmenprofils angeordnet ist und
- - aus einem Werkstoff gebildet ist, der eine geringere Formfestigkeit als der Werkstoff des primären Profilteils (14) hat,
**gekennzeichnet durch** folgende Merkmale:
- der Rahmen ist als Preßformteil ausgebildet, wobei der primäre Profilteil (14) in einer Spritzform **durch** Umspritzen des Randbereiches hergestellt ist,
- der primäre Profilteil (14) ist aus einem Werkstoff gebildet, der eine so große Formfestigkeit hat, daß zwischen dem Rahmen (12) und der Scheibe (11) ein Formschluß gewährleistet ist,
- am primären Profilteil (14; 34; 54) sind Befestigungselemente (19; 36; 57) und/oder Verankerungselemente (58) vorhanden, mittels der der Rahmen (12; 32; 52) mit einem Bauteil (37; 56) verbindbar ist.

2. Scheibeneinheit für Fenster an Kraftfahrzeugen und dergleichen, mit den Merkmalen:
- es ist eine Scheibe (71) aus Silikatglas oder aus Acrylglas vorhanden,
- es ist ein Rahmen (72) mit einem bestimmten Rahmenprofil vorhanden, der den Rand der Scheibe (71) an drei Seiten umfaßt, wobei
- der Rahmen (72) ringförmig in sich geschlossen ausgebildet ist und, aus zwei Profilteilen, einem primären Profilteil (74) und einem sekundären Profilteil (75), gebildet ist,
- der primäre Profilteil (74) drei Profilabschnitte aufweist,
- - von denen ein Profilebschnitt dem Rand der Scheibe (71) benachbart ist und
- - von denen der zweite und dritte Profilabschnitt an je einer Seite des ersten Profilabschnittes anschließen und jeweils demjenigen Flächenbereich der Scheibe (71) benachbart sind, der an den Rand der Scheibe (71) angrenzt,
- der primäre Profilteil aus einem Werkstoff gebildet ist,
- - der sich mit dem Werkstoff der Scheibe (71) nicht verbindet,
- der sekundäre Profilteil (75)
- - in einem der Anlage der Scheibe (71) en einem Bauteil (84) dienenden Bereich des Rahmenprofils angeordnet ist und
- - aus einem Werkstoff gebildet ist, der eine geringere Formfestigkeit als der Werkstoff des primären Profilteils (14) hat,
**gekennzeichnet durch** folgende Merkmale :
- der Rahmen ist als Preßformteil ausgebildet, wobei der primäre Profilteil (14) in einer Spritzform **durch** Umspritzen des Randbereiches hergestellt ist,
- der primäre Profilteil (14) ist aus einem Werkstoff gebildet, der eine so große Formfestigkeit hat, daß zwischen dem Rahmen (12) und der Scheibe (11) ein Formschluß gewährleistet ist,
- es ist ein weiterer Profilteil (81) vorhanden,
- - der so ausgebildet und angeordnet ist, daß im Zuge einer elastischen Verformung dieses Profilteils (81) oder zumindest eines Profilabschnittes (82) ein Formschluß mit einem Bsuteil (76) herstellbar ist.

3. Scheibeneinheit nach Anspruch 1 oder 2,
**gekennzeichnet durch** die Merkmale:
- der primäre Profilteil (14) ist aus einem thermoplastischen Kunststoff hergestellt, der einen ausreichend hohen Biegemodul hat, der bevorzugt größer als 1.000 N/mm² ist,
- der sekundäre Profilteil (15) ist aus einem thermoplastischen Kunststoff hergestellt, der eine Härte von weniger als 90 Shore A hat.

4. Scheibeneinheit nach Anspruch 1 oder 2,
**gekennzeichnet durch** des Merkmal:
- der sekundäre Profilteil (35) weist wenigstens einen Profilebschnitt (39) auf, der im Ruhezustand in einen Profilbereich hineinragt, der nach dem Einbau der Scheibeneinheit (30) wenigstens zum Teil von dem Bauteil (37) eingenommen wird.

5. Scheibeneinheit nach einem der Ansprüche 1 bis 4,
**gekennzeichnet durch** die Merkmale:
- der sekundäre Profilteil (15) ist aus einem Kunststoff hergestellt, der sich mit dem Werkstoff des primären Profilteils (14) nicht verbindet,
- der sekundäre Profilteil (15) umgibt den primären Profilteil (14) wenigstens abschnittweise so weit, daß ein Formschluß beider Profilteile (14; 15) gegeben ist.

6. Scheibeneinheit nach Anspruch 1 oder 2,
**gekennzeichnet durch** die Merkmale:
- der primäre und der sekundäre Profilteil (34; 35) sind aus der gleichen Kunststoffart hergestellt,
- bevorzugt ist der Kunststoff für den primären Pofilteil (34) und den sekundären Profilteil (35) Polypropylen, Polyurethan, Polyamid oder Polyvinylchlorid.

7. Scheibeneinheit nach Anspruch 1,
**gekennzeichnet durch** das Merkmal:
- die Befestigungselemente (57) und/oder Verankerungselelmente (58) sind aus dem gleichen Werkstoff wie der primäre Profilteil (54) hergestellt und vorzugsweise daran angeformt.

8. Scheibeneinheit nach Anspruch 1 oder 7,
**gekennzeichnet durch** die Merkmale:
- es sind weitere Befestigungselemente (38), vorzugsweise aus einem anderen Werkstoff, vorhanden, die mit den am primären Profilteil (34) vorhandenen Befestigungselementen **durch** Formschluß oder **durch** Materialverbund und/oder Verankerungselementen (36) verbindbar sind.

## Claims

1. A pane unit for windows in motor vehicles and the like, with the features:
- a pane (11) of silicate glass or of acrylic glass is present,
- a frame (12) with a specific profile is present, which embraces the edge (13) of the pane (11) on three sides, wherein
- the frame (12) is made closed in itself in an annular manner and is formed from two profile parts, a primary profile part (14) and a secondary profile part (15),
- the primary profile part (14) has three profile portions (16 ... 18),
- - of which one profile portion (16) is adjacent to the edge (13) of the pane (11), and
- - of which the second and third profile portions (17; 18) each adjoin one respective side of the first profile portion (16) and are each adjacent to that surface area of the pane (11) which adjoins the edge (13) of the pane (11),
- the primary profile part (14) is formed from a material
- - which does not bond with the material of the pane (11),
- the secondary profile part (15)
- - is arranged in a region of the frame profile used for the abutment of the pane (11) on a component and
- - is formed from a material which has a lower degree of non-deformability than the material of the primary profile part (14),
**characterized by** the following features:
- the frame is constructed in the form of a press-moulded part, wherein the primary profile part (14) is produced in an injection mould by injection around the edge area of the pane (11),
- the primary profile part (14) is formed from a material which has such a high degree of non-deformability that positive locking is provided between the frame (12) and the pane (11),
- fastening members (19; 36; 57) and/or anchoring members (58), by means of which the frame (12; 32; 52) can be connected to a component (37; 56), are present on the primary profile part (14; 34; 54).

2. A pane unit for windows in motor vehicles and the like, with the features:
- a pane (71) of silicate glass or of acrylic glass is present,
- a frame (72) with a specific profile is present, which embraces the edge of the pane (71) on three sides, wherein
- the frame (72) is made closed in itself in an annular manner and is formed from two profile parts, a primary profile part (74) and a secondary profile part (75).
- the primary profile part (74) has three profile portions,
- - of which one profile portion is adjacent to the edge of the pane (71), and
- - of which the second and third profile portions each adjoin one respective side of the first profile portion and are each adjacent to that surface area of the pane (71) which adjoins the edge of the pane (71),
- the primary profile part is formed from a material
- - which does not bond with the material of the pane (71),
- the secondary profile part (75)
- - is arranged in a region of the frame profile used for the abutment of the pane (71) on a component (84) and
- - is formed from a material which has a lower degree of non-deformability than the material of the primary profile part (14) [*sic*],
**characterized by** the following features:
- the frame (72) is constructed in the form of a press-moulded part, wherein the primary profile part (74) is produced in an injection mould by injection around the edge area of the pane (71),
- the primary profile part (74) is formed from a material which has such a high degree of non-deformability that positive locking is provided between the frame (72) and the pane (71),
- a further profile part (81) is present
- - which is designed and arranged in such a way that positive locking with a component (76) can be made in the course of a resilient deformation of the said profile part (81) or at least one profile portion (82).

3. A pane unit according to Claim 1 or 2, **characterized by** the features:
- the primary profile part (14) is produced from a thermoplastic material having a sufficiently high bending modulus which is preferably greater than 1,000 N/mm²,
- the secondary profile part (15) is produced from a thermoplastic material having a hardness of less than 90 Shore A.

4. A pane unit according to Claim 1 or 2, **characterized by** the feature:
- the secondary profile part (35) has at least one profile portion (39) which in the state of rest projects into a profile region occupied at least in part by the component (37) after the pane unit (30) has been fitted.

5. A pane unit according to one of Claims 1 to 4, **characterized by** the features:
- the secondary profile part (15) is produced from a plastics material not bonding with the material of the primary profile part (14),
- the secondary profile part (15) surrounds the primary profile part (14) at least in part to the extent that positive locking of the two profile parts (14; 15) is made.

6. A pane unit according to Claim 1 or 2, **characterized by** the features:
- the primary and the secondary profile parts (34; 35) are produced from the same type of plastics material,
- the plastics material for the primary profile part (34) and the secondary profile part (35) is preferably polypropylene, polyurethane, polyamide or polyvinylchloride.

7. A pane unit according to Claim 1, **characterized by** the feature:
- the fastening members (57) and/or the anchoring members (58) are produced from the same material as the primary profile part (54) and are preferably formed integrally thereon.

8. A pane unit according to Claim 1 or 7, **characterized by** the features:
- further fastening members (38), preferably of a different material, are present, which can be connected to the fastening members present on the primary profile part (34) by positive locking or by a bond of materials and/or anchoring members (36).

## Revendications

1. Vitrage pour fenêtre de voiture ou similaire, comprenant :
- une glace (11) en verre de silicate ou acrylique,
- un cadre (12) de profil déterminé, entourant les trois côtés du bord (13) de la glace (11),
- le cadre (12) étant un anneau refermé sur lui-même, constitué de deux pièces profilées, une pièce profilée primaire (14) et une pièce profilée secondaire (15),
- la pièce profilée primaire (14) comportant trois parties profilées (16, 17, 18):
- dont la première partie profilée (16) est proche du bord (13) de la glace (11) et
- dont les deuxième et troisième parties profilées (17, 18) prolongent de chaque côté la première partie profilée (16) et sont respectivement contiguës à l'une des faces de la glace (11) limitrophe du bord (13) de la glace (11),
- la pièce profilée primaire (14) étant formée d'une matière qui ne se combine pas avec la matière de la glace (11),
- la pièce profilée secondaire (15) étant montée dans une zone du profil du cadre servant à la mise en place de la glace (11) sur une pièce support, et constituée d'une matière de moindre résistance à la déformation que celle de la pièce profilée primaire (14),
**caractérisé en ce que**
- le cadre est constitué par un élément moulé sous pression, la pièce profilée primaire (14) étant fabriquée dans un moule par injection dans la zone du bord,
- la pièce profilée primaire (14) est réalisée en une matière dont la résistance à la déformation est suffisante pour qu'il se constitue entre le cadre (12) et la glace (11) une combinaison de forme, et
- sur la pièce profilée primaire (14 ; 34 ; 54) sont montés des éléments de fixation (19 ; 36 ; 57) et/ou des éléments d'ancrage (58) permettant de réunir le cadre (12 ; 32 ; 52) à une pièce support (37 ; 56).

2. Vitrage pour fenêtre de voiture ou similaire, comprenant :
- une glace (71) en verre de silicate ou acrylique,
- un cadre (72) de profil déterminé, entourant de trois côtés le bord de la glace (71),
- le cadre (72) étant un anneau refermé sur lui-même, formé de deux pièces profilées, une pièce profilée primaire (74) et une pièce profilée secondaire (75),
- la pièce profilée primaire (14) comportant trois parties profilées :
-- dont une première partie profilée est proche du bord de la glace (71), et
-- dont les deuxième et troisième parties profilées prolongent respectivement de chaque côté la première partie profilée et sont respectivement contiguës à l'une des faces de la glace (71), limitrophe du bord de la glace (71),
- la pièce profilée primaire étant formée d'une matière qui ne se combine pas avec la matière de la glace (71),
- la pièce profilée secondaire (75) étant montée dans une zone du profil du cadre servant à la mise en place de la glace (71) sur une pièce support (84), et constituée d'une matière de moindre résistance à la déformation que celle de la pièce profilée primaire (74),
**caractérisé en ce que**
- le cadre est constitué par un élément moulé sous pression, le pièce profilée primaire (74) étant fabriquée dans un moule, par injection dans la zone du bord,
- la pièce profilée primaire (74) est réalisée dans une matière dont la résistance à la déformation est suffisante pour qu'il se constitue entre le cadre (72) et la glace (71), un serrage de forme, et
- une pièce profilée supplémentaire (81) est conçue et disposée pour que, par la déformation élastique de cette pièce profilée (81), ou, au moins, d'une de ses parties profilées (82), il se constitue avec une pièce support (76), une combinaison de forme.

3. Vitrage selon la revendication 1 ou 2,
**caractérisé en ce que**
- la pièce profilée primaire (14) est fabriquée dans une matière thermoplastique, ayant un module d'élasticité suffisant, préférablement supérieur à 1.000 N/m²,
- la pièce profilée secondaire (15) est fabriquée dans une manere thermoplastique, ayant une dureté d'au moins 90 shore A.

4. Vitrage selon la revendication 1 ou 2,
**caractérisé en ce que**
la pièce profilée secondaire (35) comporte au moins une partie profilée (39) pénétrant en position de repos, dans une zone de profil devant s'appuyer, après mise en place du vitrage (30), au moins en partie, sur la pièce support (37).

5. Vitrage, selon l'une quelconque des revendications 1 à 4,
**caractérisé en ce que**
- la pièce profilée secondaire (15) est fabriquée en une matière ne pouvant pas se combiner avec la matière de la pièce profilée primaire (14), et
- la pièce profilée secondaire (15) entoure au moins partiellement la pièce profilée primaire (14) suffisamment pour qu'il puisse se constituer une combinaison de forme des deux pièces (14, 15).

6. Vitrage, selon la revendication 1 ou 2,
**caractérisé en ce que**
- les pièces profilées primaire et secondaire (34, 35) sont fabriquées dans la même matière,
- pour la pièce profilée primaire (34) et la pièce profilée secondaire (35) les matières préférées sont le polypropylène, le polyuréthane, le polyamide et le chlorure de polyvinyle.

7. Vitrage, selon la revendication 1,
**caractérisé en ce que**
les éléments de fixation (57) et ou les éléments d'ancrage (58) sont fabriqués à partir de la même matière que la pièce profilée primaire (54) et sont, de préférence, formés sur celle-ci.

8. Vitrage, selon la revendication 1 ou 7,
**caractérisé en ce que**
d'autres éléments de fixation (38) sont, de préférence, fabriqués en une autre matière, destinés à être reliés aux éléments de fixations de la pièce profilée primaire (34), soit par combinaison de forme ou par livraison de matière et/ou au moyen d'éléments d'ancrage (36).
